# EUROPEAN PATENT APPLICATION

(11) **EP 3 363 666 A1**
(43) Date of publication of application: **22.08.2018**
(21) Application number: 18150525.6
(22) Date of filing: 08.01.2018
(51) Int. Cl.: B60H 1/00, F25B 41/00, F16L 41/02, F28F 9/02

(54) **AN AIR CONDITIONING SYSTEM CONNECTOR**

(30) Priority: 16.02.2017 GB 201702497
(71) Applicant: Ford Global Technologies, LLC, Dearborn, MI 48126 (US)
(72) Inventor: MELDRUM, Steve, Leigh on Sea, Essex SS9 5FQ (GB)
(74) Representative: Haseltine Lake LLP

(57) **Abstract**

A vehicle air conditioning system connector (500) comprises: a first supply port (504a) configured to couple to a refrigerant supply line of an air conditioning system, a second supply port (506a) in fluid communication with the first supply port and configured to couple to an inlet of an evaporator (106) of the air conditioning system, a first return port (508a) configured to couple to a refrigerant return line of the air conditioning system, a second return port (510a) in fluid communication with the first return port and configured to couple to an outlet of the evaporator, a first branch port (512) in fluid communication with the first supply port and a second branch port (516) in fluid communication with the first return port and configured to allow the further evaporator to be coupled to the air conditioning system in fluid communication with the refrigerant return line.

## Description

### Technical Field

The present disclosure relates to an air conditioning system connector for a motor vehicle and is particularly, although not exclusively, concerned with an air conditioning system connector configured to simplify assembly of the air conditioning system.

### Background

Vehicles, e.g. motor vehicles, may have multiple configurations in which they can be built on the vehicle production line. For example, a vehicle may have a first configuration, in which driver and passenger seats are provided in a front compartment of the vehicle, and a second configuration, in which additional passenger seats are also provided in a rear compartment of the vehicle.

Vehicles often comprise auxiliary systems that are provided within the occupant compartments of the vehicle for improving occupant comfort and entertaining passengers during a journey. For example, the vehicle may comprise a climate control system and a media system.

For configurations of the vehicle in which passenger seating is provided in additional compartments of the vehicle, such as a rear compartment, additional components may be provided within the auxiliary systems to extend the auxiliary system into the additional compartment. However, for some auxiliary systems, it may be challenging to extend the system into the additional compartment of the vehicle by the addition of components to the system. In such cases, it may be necessary for one or more components of the auxiliary system to be interchanged, depending on the configuration of the vehicle.

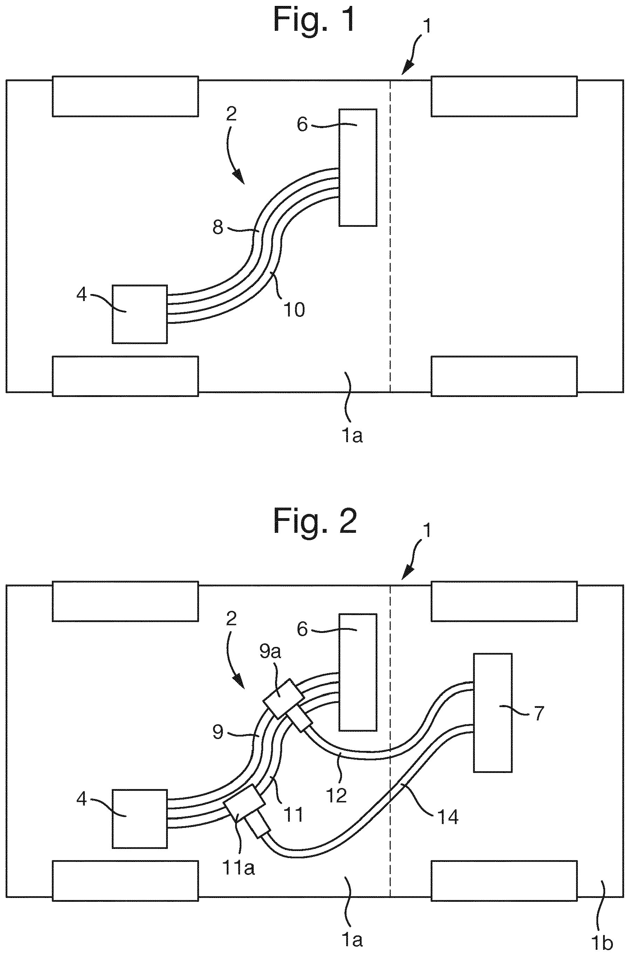

With reference to Figure 1, a vehicle 1 comprising a front passenger compartment 1 a may comprise a previously proposed Air Condition (AC) system 2. The AC system 2 may be provided as part of a climate control system of the vehicle. The AC system 2 comprises a compressor 4 configured to compress refrigerant within the system, to liquefy the refrigerant and pump the refrigerant around the system 2.

The AC system further comprises an evaporator 6. The evaporator may be provided within the front passenger compartment 1a of the vehicle. The refrigerant evaporates within the evaporator 6 and reduces the temperature of the evaporator. Air is drawn into the vehicle and blown over and/or through the evaporator 6, such that heat is transferred from the air to the evaporator 6. The cooled air is then vented into the front passenger compartment 1a of the vehicle to cool the vehicle occupants.

The AC system 2 comprises a refrigerant supply line 8 configured to carry liquid refrigerant from the compressor 4 to the evaporator 6 and a refrigerant return line 10 configured to carry gaseous refrigerant from the evaporator 6 to the compressor 4.

The AC system 2 may further comprise a condenser, not shown. The condenser may be operatively disposed between the compressor 4 and the evaporator 6, e.g. on the refrigerant supply line. Heat that is transferred into the refrigerant in the evaporator 6, may be transferred out of the refrigerant at the condenser, e.g. into a flow of air passing over or through the condenser.

With reference to Figure 2, the vehicle may be configured such that additional passenger seating is provided within an additional compartment 1b of the vehicle. When the vehicle 1 is configured in this way, it may be desirable to provide an additional evaporator 7 within the AC system 2. Air drawn into the vehicle may be passed over and/or through the additional evaporator before being vented into the additional compartment 1b.

It may be desirable for refrigerant to be circulated to the additional evaporator 7 by the compressor 4. Hence, it may be desirable for the refrigerant supply and return lines to branch upstream and downstream of the evaporator 6 respectively, in order for liquid refrigerant to be supplied to the additional evaporator 7 and for gaseous refrigerant leaving the additional evaporator to be returned to the compressor 4.

The refrigerant supply line 8 and refrigerant return line 10 are typically continuous, rigid ducts and it may be undesirable to reconfigure the refrigerant supply line 8 and refrigerant return line 10 to include branches or junctions during assembly of the vehicle, e.g. on the vehicle production line. Hence, as depicted in Figure 2, when the additional evaporator 7 is provided within the AC system 2 the refrigerant supply and return lines 8, 10 may be replaced with branched supply and return lines 9, 11. The branched supply line may each comprise a branch or spur 9a, 11a to allow additional refrigerant supply and return lines 12, 14 to be provided between the branches of the branched supply and return lines 9, 11 and the additional evaporator 7.

Providing different components within the AC system 2 depending on the configuration of the motor vehicle 1 leads to an increase in the numbers of components being stored and managed on the vehicle production line and in the complexity of the assembly process for the vehicle 1. Furthermore, if the motor vehicle is converted at a later date, e.g. following manufacture of the vehicle, to provide additional seats within the additional compartment 1b of the vehicle, it may be necessary to replace the existing components of the AC system 2 in order to extend the AC system into the additional compartment 1b.

### Statements of Invention

According to an aspect of the present disclosure, there is provided, a vehicle air conditioning system connector comprising: a first supply port configured to couple to a refrigerant supply line of an air conditioning system, wherein the first supply port comprises one of a male and female connector; a second supply port in fluid communication with the first supply port and configured to couple to an inlet of an evaporator of the air conditioning system, wherein the second supply port comprises the other of the male and female connector of the first supply port and is configured to correspond, e.g. in shape and size, to the male or female connector of the first supply port; a first return port configured to couple to a refrigerant return line of the air conditioning system, wherein the first return port comprises one of a male and female connector; a second return port in fluid communication with the first return port and configured to couple to an outlet of the evaporator, wherein the second return port comprises the other of the male and female connector of the first return port and is configured to correspond, e.g. in shape and size, to the male or female connector of the first return port; a first branch port in fluid communication with the first supply port and configured to allow a further evaporator to be coupled to the air conditioning system in fluid communication with the refrigerant supply line; and a second branch port in fluid communication with the first return port and configured to allow the further evaporator to be coupled to the air conditioning system in fluid communication with the refrigerant return line.

The refrigerant supply line may comprise a connecting portion configured to couple to the connector of the first supply port. The connecting portion of the refrigerant supply line may be couplable, e.g. directly couplable, to the inlet of the evaporator. The connector of the second supply port may be the same shape as the connecting portion of the refrigerant supply line. The refrigerant return line may comprise a connecting portion configured to couple to the connector of the first return port. The connecting portion of the refrigerant return line may be couplable, e.g. directly couplable, to the outlet of the evaporator. The connector of the second return port may be the same shape as the connecting portion of the refrigerant return line.

The connector of the second supply port may therefore be couplable to the connector of the first supply port of a similar connector. Similarly, the connector of the second supply port may be couplable to the connector of the first supply port of a similar connector.

The connector may be configured to be mounted on the evaporator. For example, the connector may comprise a bore configured to receive a fastener for coupling the connector to the evaporator.

The first and second supply ports and the first and second return ports may be integrally formed on the connector, e.g. on a body of the connector.

The connector may define a supply passage configured to carry refrigerant between the first and second supply ports. The connector may define a return passage configured to carry refrigerant between the first and second return ports. The first and second branch ports may be configured such that flow paths defined by the first and second branch ports are arranged at right angles, e.g. at substantially 90 degrees, to the flow of refrigerant in the supply passage and return passage respectively.

The first and second branch ports may be configured such that flow paths, e.g. flow path lines, defined by the first and second branch ports are arranged at an angle relative to each other, e.g. are not parallel with each other. For example, the flow paths may be arranged at substantially 90 degrees to each other.

The first and second branch ports may be configured such that flow paths, e.g. flow path lines, defined by the first and second branch ports are arranged in the same plane as one another.

Alternatively, the first and second branch ports may be configured such that flow paths, e.g. flow path lines, defined by the first and second branch ports are arranged in planes that are parallel to and offset from one another.

A vehicle air conditioning system may comprise: a refrigerant pump; a first evaporator; and the above-mentioned vehicle air condition system connector. The second supply port of the connection may be coupled to an inlet of the first evaporator and the second return port of the connector may be coupled to an outlet of the first evaporator. The vehicle air conditioning system may further comprise a refrigerant supply line coupled to the first supply port of the connector and in fluid communication with an outlet of the refrigerant pump and a refrigerant return line coupled to the first return port of the connector and in fluid communication with an inlet of the refrigerant pump.

The refrigerant supply line may be couplable, e.g. directly couplable, to the inlet of the first evaporator, e.g. if the vehicle air conditioning system connector was omitted. The refrigerant return line may be couplable, e.g. directly couplable, to the outlet of the first evaporator, e.g. if the vehicle air conditioning system connector was omitted.

The system may further comprise a second evaporator. An inlet of the second evaporator may be in fluid communication with the first branch port of the vehicle air conditioning system connector. An outlet of the second evaporator may be in fluid communication with the second branch port of the vehicle air conditioning system connector. For example, a further refrigerant supply line may be provided between the first branch port and the inlet of the second evaporator. Similarly, a further refrigerant return line may be provided between the second branch port and the outlet of the second evaporator.

The vehicle air conditioning system connector may be mounted on the first evaporator, e.g. directly coupled to the first evaporator using one or more fasteners.

At least a portion of the refrigerant supply line and at least a portion of the refrigerant return line may be flexible. This may enable to refrigerant supply line and refrigerant return line to be flexed in order to couple to the connector or the first evaporator, e.g. depending on the configuration of the vehicle air conditioning system.

According to another aspect of the present disclosure, there is provided a method of extending a vehicle air conditioning system, wherein the vehicle air conditioning system comprises: a refrigerant pump; an evaporator; a refrigerant supply line couplable to an inlet of the first evaporator and in fluid communication with an outlet of the refrigerant pump; and a refrigerant return line couplable to an outlet of the first evaporator and in fluid communication with an inlet of the refrigerant pump, wherein the method comprises: providing the above-mentioned vehicle air conditioning system connector; coupling the connector to the evaporator such that the second supply port of the connector is in fluid communication within the inlet of the evaporator and the second return port of the connector is in fluid communication with the outlet of the evaporator; coupling the refrigerant supply line to the first supply port of the connector; coupling the refrigerant return line to the first return port of the connector; and arranging an additional evaporator such that an inlet of the additional evaporator is in fluid communication with the first branch port of the connector and an outlet of the additional evaporator is in fluid communication with the second branch port of the connector.

For example, the method may further comprise: providing a further refrigerant supply line between the first branch port and the inlet of the second evaporator and providing a further refrigerant return line between the second branch port and the outlet of the second evaporator.

The method may further comprise decoupling the refrigerant supply line from the inlet of the evaporator. The method may further comprise decoupling the refrigerant return line from the outlet of the evaporator.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a schematic view of a first configuration of a previously proposed AC system for a motor vehicle;
Figure 2 is a schematic view of a second configuration of a previously proposed AC system for a motor vehicle;
Figure 3 is a schematic view of an AC system for a motor vehicle, according to arrangements of the present disclosure, installed in a motor vehicle having a first configuration;
Figure 4 is a schematic view of the AC system for a motor vehicle, according to arrangements of the present disclosure, installed in a motor vehicle having a second configuration;
Figure 5a is a cross-sectional view of an AC system connector, according to arrangements of the present disclosure;
Figure 5b is a cross-sectional view of the AC system connector on line A-A;
Figure 6a is a perspective view of the AC system connector and an evaporator of an the AC system in a disassembled configuration;
Figure 6b is a perspective view of the AC system connector and an evaporator of an the AC system in an assembled configuration;
Figure 7 is a schematic cross-sectional view of the AC system connector and an evaporator of an the AC system in the assembled configuration; and
Figure 8 shows a method of extending an AC system for a motor vehicle, according to arrangements of the present disclosure.

### Detailed Description

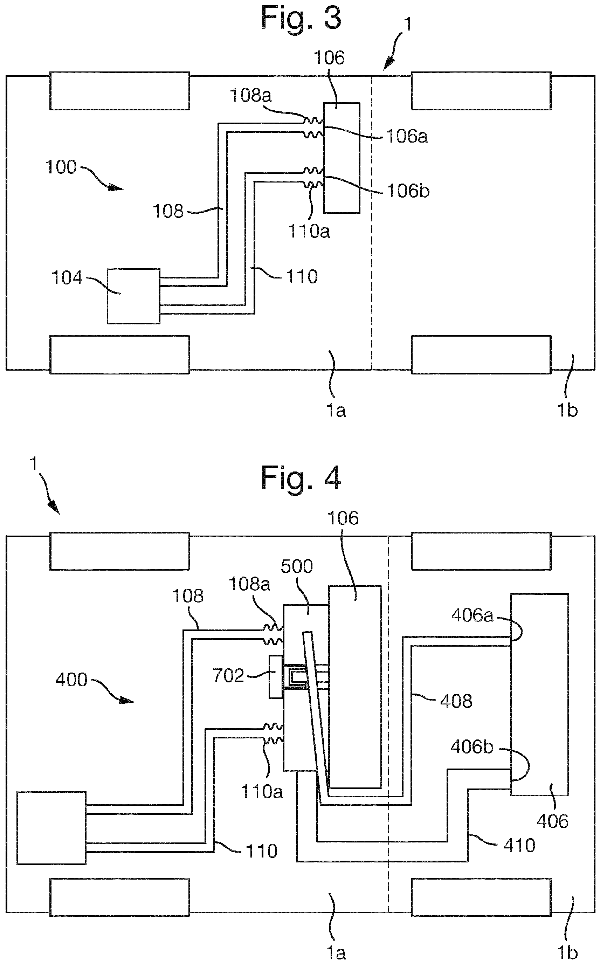

Figure 3 depicts an AC system 100, according to arrangements of the present disclosure, which may be installed within the vehicle 1 instead of the previously proposed AC system 2. The AC system 100 depicted in Figure 3 may be installed within the vehicle 1 when the vehicle is manufactured in a first configuration. The first configuration may be a configuration in which the occupant seating of the vehicle is provided within a single compartment of the vehicle, e.g. within the front compartment 1a.

The AC system 100 comprises a compressor 104 and an evaporator 106. The compressor 104 and the evaporator 106 may be similar to the compressor 4 and evaporator 6 of the previously proposed AC system described above with reference to Figures 1 and 2. A condenser, not show, may also be provided.

The AC system 100 further comprises a refrigerant supply line 108, coupled to an inlet 106a of the evaporator, and a refrigerant return line 110, coupled to an outlet 106b of the evaporator. The refrigerant line 108, 110 may be similar to the refrigerant lines 8, 10, except that the refrigerant lines 108, 110 may be configured to facilitate the extension of the AC system to include one or more additional evaporators, e.g. during the assembly process of the motor vehicle, as described below.

With reference to Figure 4, the AC system can be extended to an extended AC system 400, which includes one or more additional evaporators 406. As shown, an AC system connector 500, according to arrangements of the present disclosure, is provided within the extended AC system 400. The AC system connector 500 is configured to enable the additional evaporator 406 to be connected into the system, e.g. via additional refrigerant supply and return lines 408, 410.

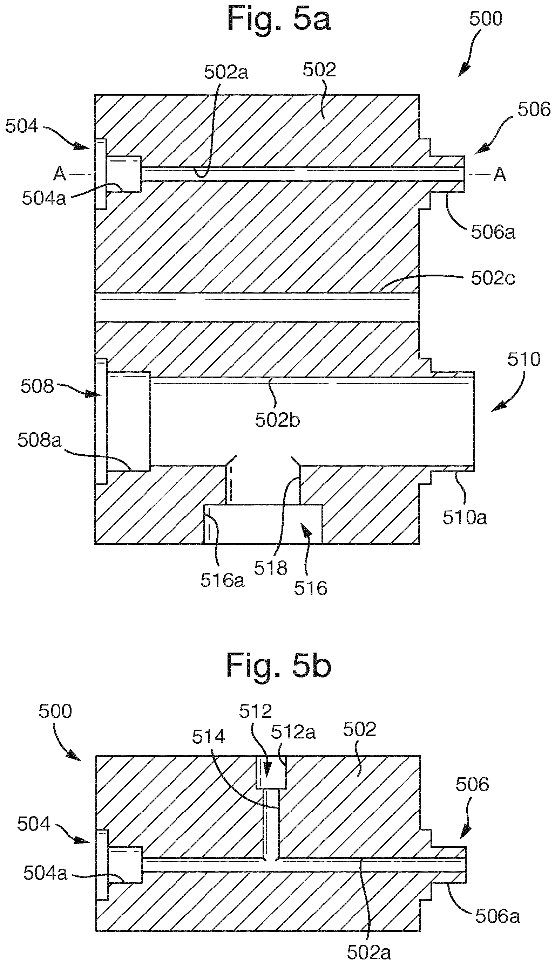

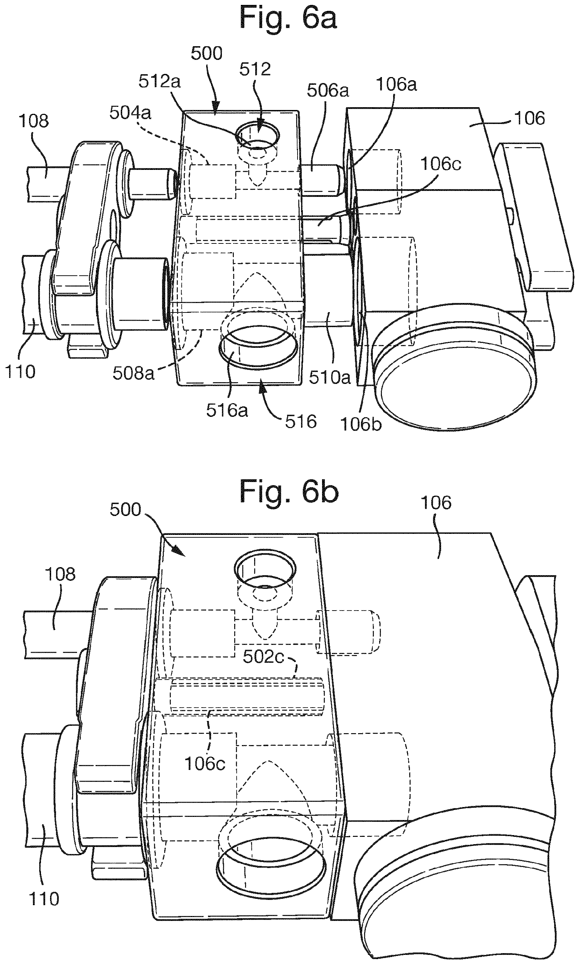

With reference to Figures 5a, 5b, 6a and 6b, a vehicle AC system connector 500 comprises a body portion 502, a first supply port 504, a second supply port 506, a first return port 508 and a second return port 510.

The first supply port 504 comprises a female connecting portion 504a and the second supply port 506 comprises a male connecting portion 506a. The male and female connecting portions correspond to one another, e.g. a space defined by the female connecting portion 504a may be the same shape and size as a protrusion defined by the male connecting portion 506a. In other words, the female connection portion 504a may be couplable to the male connecting portion 506a of another, similar vehicle AC system connector 500.

Although in the arrangement shown, the first supply port 504 comprises the female connecting portion and the second supply port 506 comprises the male connecting portion, it is also envisaged, that in other arrangements of the disclosure, the first supply port 504 may comprise the male connecting portion and the second supply port 506 may comprise the female connecting portion.

The first return port 508 comprises a female connecting portion 508a and the second return port 510 comprises a male connecting portion 510a. The male and female connecting portions 508a, 510a correspond to one another in the same way as the male and female connecting portions 504a, 506a defined by the first and second supply ports.

Although in the arrangement shown, the first return port 508 comprises the female connecting portion and the second return port 510 comprises the male connecting portion, it is also envisaged, that in other arrangements of the disclosure, the first return port 508 may comprise the male connecting portion and the second return port 510 may comprise the female connecting portion.

The vehicle AC system connector 500, e.g. the body portion 502, defines a supply passage 502a between the first and second supply ports 504, 506. In this way, the first and second supply ports are in fluid communication with each other.

The body portion 502 further defines a return passage 502b between the first and second return ports 508, 510. The first and second return ports are in fluid communication with each other via the return passage 502b.

In the arrangement depicted in Figures 5a, 5b, 6a and 6b, the return passage 502b has a larger diameter than the supply passage 502a. However, in other arrangements, the supply and return passages 502a, 502b may be the same diameter, or the supply passage may have a larger diameter than the return passage. The diameters of the supply and return passages 502a, 502b may correspond to the diameters of the supply and return ports 504, 506, 508, 510 respectively, e.g. the diameters of flow paths defined by the supply and return ports.

The first and second supply ports 504, 506 and the first and second return ports 508, 510 may be integrally formed on the vehicle AC system connector 500, e.g. on the body portion 502.

The vehicle AC system connector 500 further comprises a first branch port 512. As depicted in Figure 5, the first branch port 512 comprises a female connecting portion 512a. However, in other arrangements the first branch port 512 may comprise a male connecting portion.

The first branch port 512 is in fluid communication with the first and second supply ports 502, 504. For example, as depicted in Figure 5b, a first branch passage 514 may branch from the supply passage 502a. The first branch port 512 may be in fluid communication with the first branch passage 514. The first branch passage 514 may be substantially the same diameter as the supply passage 502a. Alternatively, the diameter of the first branch passage 514 may be smaller or may be larger than the supply passage 502a

The first branch passage 514 may branch from the supply passage 502a at an angle relative to the supply passage 502a. In other words, a flow path defined by that first branch passage 514 may be at an angle relative to a flow path defined by the supply passage 502a. For example, the first branch passage 514 may branch from the supply passage 502a at an angle of substantially 90 degrees relative to the supply passage 502a. A flow path defined by first branch port 512 may be aligned, e.g. axially aligned, with the flow path defined by the first branch passage 514.

The vehicle AC system connector further comprises a second branch port 516. The second branch port 516 is in fluid communication with the first and second return ports 508, 510. For example, the second branch port 516 may be in fluid communication with a second branch passage 518 that may branch from the return passage 502b.

The second branch passage 518 may be substantially the same diameter as the return passage 502b. Alternatively, the diameter of the second branch passage 518 may be smaller or may be larger than the return passage 502b. As depicted, the second branch passages 518 may have a larger diameter that the first branch passage 514. However, in other arrangements, the diameter of the second branch passage 518 may be the same as the first branch passage 514, or may be smaller.

The second branch passage 518 may branch from the return passage 502b at an angle relative to the return passage 502b, e.g. relative to the flow path defined by the return passage. For example, the second branch passage 518 may branch from the return passage 502b at an angle of substantially 90 degrees. A flow path defined by second branch port 516 may be aligned, e.g. axially aligned, with the flow path defined by the second branch passage 518.

The flow paths defined by the first and second branch ports 512, 516 may be arranged at an angle relative to one another. For example, the first and second branch ports 512, 516 may be arranged at an angle of substantially 90 degrees to each other. The flow paths defined by the first and second branch ports 512, 516 may be arranged in the same plane (which may be perpendicular to a longitudinal axis of passage 502a or 502b). Alternatively, the flow paths defined by the first and second branch ports 512, 516 may be arranged in planes that are parallel to and offset from one another. In some arrangements, the flow paths defined by the first and second branch ports 512, 516 may be arranged in a plane or planes that are perpendicular to the flow paths defined by the supply and return passages 502a, 502b.

The relative arrangements of the first and second branch ports 512, 516 may be configured in order to improve the packaging of additional supply and return lines that may be coupled to the first and second branch ports, as described below.

In the arrangement shown in Figures 5a, 5b, 6a and 6b, the first and second branch ports 512, 516 comprise female connecting portions 512a, 516a, configured to couple to the additional supply and return lines respectively, e.g. configured to receive a portion of the additional supply and return lines. However, it is also envisaged that the first and second branch ports 512, 516 may comprise male connecting portions for connecting to the additional supply and return lines, e.g. configured to be received by a portion of the additional supply and return lines respectively.

As shown in Figure 6a and 6b, the connecting portion 506a of the second supply port 506 may be couplable, e.g. directly couplable, to an inlet 106a of the evaporator 106 and the connecting portion 510a of the second return port 510 may be couplable, e.g. directly, couplable to an outlet 106b of the evaporator 106.

In some arrangements of the disclosure, the vehicle AC system connector 500 may be mounted on the evaporator 106. For example, the vehicle AC system connector 500 may be coupled to the evaporator 106 using one or more fasteners.

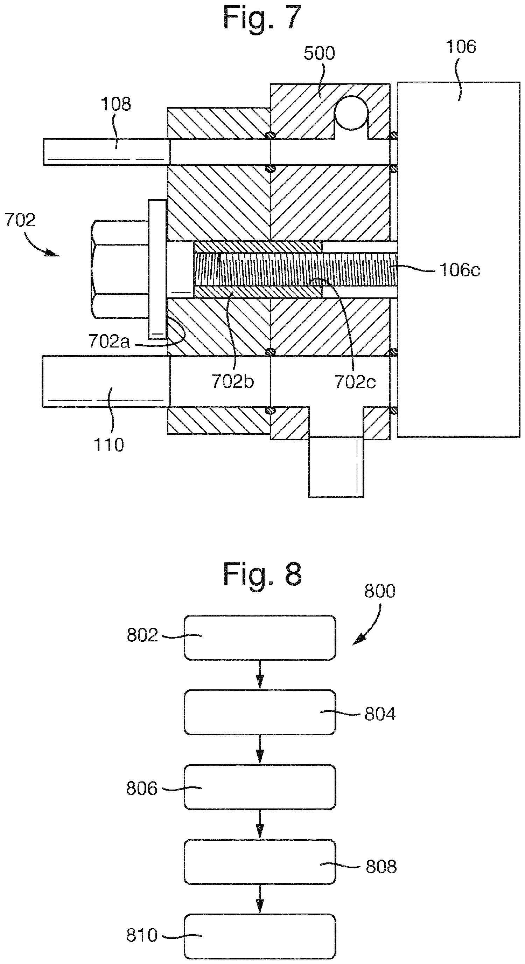

With reference to Figure 7, the vehicle AC system connector 500 comprises a bore 502c configured to receive a fastening portion 106c of the evaporator. The bore 502c extends through the body portion 502 of the vehicle AC system connector.

The fastening portion 106c comprises a threaded shaft. The AC system 100 further comprises a fastening component 702 configured to be threaded onto the fastening portion 106c. The fastening component 702 comprises a shoulder 702a configured to abut the vehicle AC system connector 500, when the fastening component is threaded onto the fastening portion 106c, and clamp the vehicle AC system connector 500 against the evaporator 106.

As shown in Figure 7, the fastening portion 106c of the evaporator may not extend through the bore 502c, e.g. through the full length of the bore. As depicted, the fastening component 702 comprises a shank 702b configured to be at least partially received within the bore 502c. The shank 702b comprises a bore having an internally threaded portion 702c configured to receive, e.g. be threaded on to, the fastening portion 106c. In this way the fastening component 702 may be configured to effectively extend the length of the fastening portion 106c of the evaporator when the AC system connector is provided within the system. As such, the fastening portion 106c of the evaporator, which may be a standard component, does not need to change to accommodate the connector 500.

With reference to Figure 8, a method 800 of extending a vehicle air conditioning system according to arrangements of the present disclosure comprises a first step 802, in which the vehicle AC system connector 500 is provided.

The method 800 comprises a second step 804, in which the vehicle AC system connector 500 is coupled to the evaporator 106. The vehicle AC system connector 500 may be coupled to the evaporator 106 such that the second supply port of the connector 506 is in fluid communication with the inlet 106a of the evaporator and the second return port 510 of the vehicle AC system connector is in fluid communication with the outlet 106b of the evaporator.

The method 800 further comprises a third step 806, in which the refrigerant supply line 108 is coupled to the first supply port 504 of the vehicle AC system connector. As described above, the refrigerant supply line 108 may be provided within the arrangement of the AC system 100 depicted in Figure 3, in which the refrigerant supply line 108 is coupled, e.g. directly coupled, to the inlet 106a of the evaporator. Hence, in order to allow the refrigerant supply line 108 to be provided within the arrangement shown in Figure 4, at least a portion 108a of the refrigerant supply line may be flexible, e.g. compressible and/or extendible. The refrigerant supply line 108 may thereby be deformed, compressed and/or extended in order to allow the refrigerant supply line to be coupled to the first supply port 504 of the vehicle AC system connector 500 instead of the being coupled directly to the evaporator 106.

The method 800 may further comprise a fourth step 808, in which the refrigerant return line 110 is coupled to the first return port 508 of the vehicle AC system connector. At least a portion 110a of the refrigerant return line 110 may be flexible in order to allow the refrigerant supply line to be provided within the arrangements of the AC system 100 shown in Figures 3 and 4, e.g. in order to allow the refrigerant return line 110 to be coupled to the vehicle AC system connector 500 or directly to the evaporator 106 depending on the configuration of the AC system 100.

The method 800 may further comprise a fifth step 810, in which the additional evaporator 406 is provided. The additional evaporator may be provided within an additional compartment of the motor vehicle, such as the rear compartment 1b. As shown in Figure 4, the additional evaporator may be arranged such that an inlet 406a of the additional evaporator is in fluid communication with the first branch port 512 of the vehicle AC system connector and an outlet 406b of the additional evaporator is in fluid communication with the second branch port 516 of the vehicle AC system connector. The additional supply line 408 may be provided between the first branch port 512 of the vehicle AC system connector 500 and the inlet of the additional evaporator 406, and the additional return line 410 may be provided between the second branch port 516 of the vehicle AC system connector and the outlet of the additional evaporator 406.

The method 800 described above may be used during an original manufacturing process of the vehicle AC system 100 when the AC system is to include an evaporator and an additionally evaporator. For example when a vehicle, in which the AC system is to be installed, includes passenger seating within two or more compartments of the vehicle.

Additionally, the method 800 may be used to extend a previously manufactured AC system, e.g. in order to retrofit an additional evaporator to the AC system. For example, an additional evaporator may be retrofitted to a vehicle being converted to include passenger seating within an additional compartment of the vehicle. In this case, the method 800 may comprise additional steps in which the refrigerant supply line 108 is disconnected from the inlet 106a of the evaporator 106 and the refrigerant return line 110 is disconnected from the outlet 106b of the evaporator 106. These additional steps may be performed before the steps of the method 800 mentioned above.

This application claims priority from United Kingdom patent application GB1702497.7. To preserve the subject matter of the priority founding application, the original claims of GB1702497.7 are included within the present specification as additional statements of invention, which are set out below:
Statement 1. A vehicle air conditioning system connector comprising:
   a first supply port configured to couple to a refrigerant supply line of an air conditioning system, wherein the first supply port comprises one of a male and female connector;
   a second supply port in fluid communication with the first supply port and configured to couple to an inlet of an evaporator of the air conditioning system, wherein the second supply port comprises the other of the male and female connector of the first supply port and is configured to correspond to the male or female connector of the first supply port;
   a first return port configured to couple to a refrigerant return line of the air conditioning system, wherein the first return port comprises one of a male and female connector;
   a second return port in fluid communication with the first return port and configured to couple to an outlet of the evaporator, wherein the second return port comprises the other of the male and female connector of the first return port and is configured to correspond to the male or female connector of the first return port;
   a first branch port in fluid communication with the first supply port and configured to allow a further evaporator to be coupled to the air conditioning system in fluid communication with the refrigerant supply line; and
   a second branch port in fluid communication with the first return port and configured to allow the further evaporator to be coupled to the air conditioning system in fluid communication with the refrigerant return line.
Statement 2. The vehicle air conditioning system connector of statement 1, wherein the connector is configured to be mounted on the evaporator.
Statement 3. The vehicle air conditioning system connector of statement 1 or 2, wherein the connector comprises a bore configured to receive a fastener for coupling the connector to the evaporator.
Statement 4. The vehicle air conditioning system connector of any of the preceding statements, wherein the first and second supply ports and the first and second return ports are integrally formed on the connector.
Statement 5. The vehicle air conditioning system connector of any of the preceding statements, wherein the connector defines a supply passage configured to carry refrigerant between the first and second supply ports and a return passage configured to carry refrigerant between the first and second return ports.
Statement 6. The vehicle air conditioning system connector of statement 5, wherein the first and second branch ports are configured such that flow paths defined by the first and second branch ports are arranged at right angles to the flow of refrigerant in the supply passage and return passage respectively.
Statement 7. The vehicle air conditioning system connector of any of the preceding statements, wherein the first and second branch ports are configured such that flow paths defined by the first and second branch ports are arranged at an angle relative to each other.
Statement 8. The vehicle air condition system connector of any of the preceding statements, wherein the first and second branch ports are configured such that flow paths defined by the first and second branch ports are arranged in the same plane as one another.
Statement 9. The vehicle air conditioning system connector of any of statements 1 to 7, wherein the first and second branch ports are configured such that flow paths defined by the first and second branch ports are arranged in planes that are parallel to and offset from one another.
Statement 10. A vehicle air conditioning system comprising:
   a refrigerant pump;
   a first evaporator;
   the vehicle air condition system connector of any of the preceding statements, wherein the second supply port of the connection is coupled to an inlet of the first evaporator and the second return port of the connector is coupled to an outlet of the first evaporator;
   a refrigerant supply line coupled to the first supply port of the connector and in fluid communication with an outlet of the refrigerant pump; and
   a refrigerant return line coupled to the first return port of the connector and in fluid communication with an inlet of the refrigerant pump.
Statement 11. The vehicle air conditioning system of statement 10, wherein the refrigerant supply line is couplable to the inlet of the first evaporator and the refrigerant return line is couplable to the outlet of the first evaporator.
Statement 12. The vehicle air conditioning system of statement 10 or 11, wherein the system further comprises a second evaporator, wherein an inlet of the second evaporator is in fluid communication with the first branch port of the vehicle air conditioning system connector and an outlet of the second evaporator is in fluid communication with the second branch port of the vehicle air conditioning system connector.
Statement 13. The vehicle air conditioning system of any of statements 10 to 12, wherein the vehicle air conditioning system connector is mounted on the first evaporator.
Statement 14. The vehicle air conditioning system of any of statements 10 to 13, wherein at least a portion of the refrigerant supply line and at least a portion of the refrigerant return line are flexible.
Statement 15. A method of extending a vehicle air conditioning system, wherein the vehicle air conditioning system comprises:
   a refrigerant pump;
   an evaporator;
   a refrigerant supply line couplable to an inlet of the first evaporator and in fluid communication with an outlet of the refrigerant pump; and
   a refrigerant return line couplable to an outlet of the first evaporator and in fluid communication with an inlet of the refrigerant pump, wherein the method comprises:
      providing a vehicle air conditioning system connector according to any of statements 1 to 9,
      coupling the connector to the evaporator such that the second supply port of the connector is in fluid communication within the inlet of the evaporator and the second return port of the connector is in fluid communication with the outlet of the evaporator;
      coupling the refrigerant supply line to the first supply port of the connector;
      coupling the refrigerant return line to the first return port of the connector; and
      arranging an additional evaporator such that an inlet of the additional evaporator is in fluid communication with the first branch port of the connector and an outlet of the additional evaporator is in fluid communication with the second branch port of the connector.
Statement 16. The method of statement 15, wherein the method further comprises:
   decoupling the refrigerant supply line from the inlet of the evaporator; and
   decoupling the refrigerant return line from the outlet of the evaporator.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A vehicle air conditioning system connector comprising:
a first supply port configured to couple to a refrigerant supply line of an air conditioning system, wherein the first supply port comprises one of a male and female connector;
a second supply port in fluid communication with the first supply port and configured to couple to an inlet of an evaporator of the air conditioning system, wherein the second supply port comprises the other of the male and female connector of the first supply port and is configured to correspond to the male or female connector of the first supply port;
a first return port configured to couple to a refrigerant return line of the air conditioning system, wherein the first return port comprises one of a male and female connector;
a second return port in fluid communication with the first return port and configured to couple to an outlet of the evaporator, wherein the second return port comprises the other of the male and female connector of the first return port and is configured to correspond to the male or female connector of the first return port;
a first branch port in fluid communication with the first supply port and configured to allow a further evaporator to be coupled to the air conditioning system in fluid communication with the refrigerant supply line; and
a second branch port in fluid communication with the first return port and configured to allow the further evaporator to be coupled to the air conditioning system in fluid communication with the refrigerant return line.

2. The vehicle air conditioning system connector of claim 1, wherein the connector is configured to be mounted on the evaporator.

3. The vehicle air conditioning system connector of claim 1 or 2, wherein the connector comprises a bore configured to receive a fastener for coupling the connector to the evaporator.

4. The vehicle air conditioning system connector of any of the preceding claims, wherein the first and second supply ports and the first and second return ports are integrally formed on the connector.

5. The vehicle air conditioning system connector of any of the preceding claims, wherein the connector defines a supply passage configured to carry refrigerant between the first and second supply ports and a return passage configured to carry refrigerant between the first and second return ports.

6. The vehicle air conditioning system connector of claim 5, wherein the first and second branch ports are configured such that flow paths defined by the first and second branch ports are arranged at right angles to the flow of refrigerant in the supply passage and return passage respectively.

7. The vehicle air conditioning system connector of any of the preceding claims, wherein the first and second branch ports are configured such that flow paths defined by the first and second branch ports are arranged at an angle relative to each other.

8. The vehicle air condition system connector of any of the preceding claims, wherein the first and second branch ports are configured such that flow paths defined by the first and second branch ports are arranged in the same plane as one another.

9. The vehicle air conditioning system connector of any of claims 1 to 7, wherein the first and second branch ports are configured such that flow paths defined by the first and second branch ports are arranged in planes that are parallel to and offset from one another.

10. A vehicle air conditioning system comprising:
a refrigerant pump;
a first evaporator;
the vehicle air condition system connector of any of the preceding claims, wherein the second supply port of the connection is coupled to an inlet of the first evaporator and the second return port of the connector is coupled to an outlet of the first evaporator;
a refrigerant supply line coupled to the first supply port of the connector and in fluid communication with an outlet of the refrigerant pump; and
a refrigerant return line coupled to the first return port of the connector and in fluid communication with an inlet of the refrigerant pump.

11. The vehicle air conditioning system of claim 10, wherein the refrigerant supply line is couplable to the inlet of the first evaporator and the refrigerant return line is couplable to the outlet of the first evaporator.

12. The vehicle air conditioning system of claim 10 or 11, wherein the system further comprises a second evaporator, wherein an inlet of the second evaporator is in fluid communication with the first branch port of the vehicle air conditioning system connector and an outlet of the second evaporator is in fluid communication with the second branch port of the vehicle air conditioning system connector.

13. The vehicle air conditioning system of any of claims 10 to 12, wherein the vehicle air conditioning system connector is mounted on the first evaporator.

14. The vehicle air conditioning system of any of claims 10 to 13, wherein at least a portion of the refrigerant supply line and at least a portion of the refrigerant return line are flexible.

15. A method of extending a vehicle air conditioning system, wherein the vehicle air conditioning system comprises:
a refrigerant pump;
an evaporator;
a refrigerant supply line couplable to an inlet of the first evaporator and in fluid communication with an outlet of the refrigerant pump; and
a refrigerant return line couplable to an outlet of the first evaporator and in fluid communication with an inlet of the refrigerant pump, wherein the method comprises:
providing a vehicle air conditioning system connector according to any of claims 1 to 9,
coupling the connector to the evaporator such that the second supply port of the connector is in fluid communication within the inlet of the evaporator and the second return port of the connector is in fluid communication with the outlet of the evaporator;
coupling the refrigerant supply line to the first supply port of the connector;
coupling the refrigerant return line to the first return port of the connector; and
arranging an additional evaporator such that an inlet of the additional evaporator is in fluid communication with the first branch port of the connector and an outlet of the additional evaporator is in fluid communication with the second branch port of the connector.
